Europäisches Patentamt

European Patent Office

Office européen des brevets

(19)

(11) Veröffentlichungsnummer: **0 353 495 B1**

# EUROPÄISCHE PATENTSCHRIFT

(12)

(45) Veröffentlichungstag der Patentschrift: **18.05.94**

(21) Anmeldenummer: **89112641.9**

(22) Anmeldetag: **11.07.89**

(51) Int. Cl.5: **G02B 27/60**, G02B 21/00, G01B 11/02

(54) **Anordnung zur Erzeugung eines optischen Bildkontrastes.**

(30) Priorität: **03.08.88 DE 3826317**

(43) Veröffentlichungstag der Anmeldung:
**07.02.90 Patentblatt 90/06**

(45) Bekanntmachung des Hinweises auf die
Patenterteilung:
**18.05.94 Patentblatt 94/20**

(84) Benannte Vertragsstaaten:
**AT CH DE FR GB IT LI**

(56) Entgegenhaltungen:
DE-A- 3 527 074
US-A- 3 926 500

OPTIK, Band 79, Nr. 3, Juni 1988, Seiten
123-127; B. NEU-
MANN:"Amplitudenmodulationskontrast"

PROCEEDINGS OF THE SPIE, Band 809, 1987,
Seiten 107-113; G.O. XIAO et al.: "Areal-time
confocal scanning optical microscope"

OPTIK, Band 80, Nr. 3, September 1988, Seiten 129-135; B. NEUMANN: "Simultaner Amplitudenmodulationskontrast"

(73) Patentinhaber: **Leica Industrieverwaltung
GmbH
Postfach 20 20
D-35530 Wetzlar(DE)**

(72) Erfinder: **Neumann, Burkhard, Dr.
Gotenweg 62
D-6330 Wetzlar(DE)**

## Beschreibung

Die Erfindung betrifft eine Anordnung zur Erzeugung eines optischen Bildkontrastes nach dem Oberbegriff des Anspruchs 1.

Die klassische optische Bilderzeugung hat Grenzen hinsichtlich der Tiefenschärfe und der Auflösung, die von modernen Anordnungen u.a. unter Ausnutzung des Moiré-Effekts und von Raster-Verfahren unterschritten werden, wobei durch die Verbindung mit optischen Wandlern und mit der Elektronik auch von den Erfordernissen der direkten Bildbetrachtung mit dem menschlichen Auge abgewichen werden kann.

Aus der DE-A1 35 27 074 ist eine vorzugsweise für den Einsatz in Stereo-Operationsmikroskopen bestimmte Anordnung mit einem Projektions- und einem Referenzgitter zur Erzeugung eines Moiré-Musters bekannt, bei der die relative Lage von Projektionsgitter und Referenzgitter durch eine kippbare planparallele Glasplatte verändert werden kann, und zwar vorzugsweise durch periodisches Kippen. Die Anordnung dient zur Bestimmung der Oberflächengstalt von Objekten mittels Höhenlinien, die durch den Moiré-Effekt entstehen.

Die bekannte Anordnung ist nicht geeignet für Geräte mit hoher Mikroskopauflösung und hoher Tiefenschärfe. Projektions- und Referenzgitter sind zu einem feststehenden Bauelement vereinigt. Die Relativbewegung wird durch ein nachgeordnetes optisches Element erzeugt und ist periodisch. Da das Referenzgitter relativ zum Objekt nicht bewegt wird, wird nicht die ganze Objektfläche gleichmäßig beobachtet, sondern nur der auf die Gitteröffnungen abgebildete Teil.

Aus der DE-A1 23 60 197 und aus G.Q.Xiao, G.S.Kino, SPIE Vol. 809, Scanning Imaging Technology 1987, S. 107, sind konfokale optische Rastermikroskope mit simultaner Beobachtung einer Vielzahl von Objektpunkten bekannt. Dabei wird eine rotierende Punktrasterscheibe (Nipkow-Scheibe) verwendet.
Zur Beleuchtung wird die Scheibe auf das Objekt abgebildet. Zum Nachweis wird das Objekt zurück auf die Scheibe abgebildet.

Durch die konfokale Anordnung wird eine verbesserte Auflösung in der Objektebene erreicht und eine erhöhte Tiefenschärfe gegenüber dem klassischen Mikroskop ermöglicht. Durch die simultane Beobachtung vieler Punkte wird gegenüber bekannten Ein-Strahl-Rastermikroskopen eine bessere Lichtausbeute und ein schnellerer Bildaufbau erreicht.

Beleuchtungs- und Nachweisstrahlengang sind zwischen Scheibe und Objekt vereinigt. Das verursacht große Probleme bei der Trennung des Nachweis-Lichts von störendem Licht und dadurch effektive Lichtverluste im Nachweis. Eine in Xiao et al. zitierte Anordnung von Petran et al. nach dem sonst gleichen Prinzip benutzt jeweils zwei Löcher aus verschiedenen Bereichen der umlaufenden Scheibe für Beleuchtungs- und Nachweis-Strahlengang. Dadurch sind die Herstellung einer genügend exakten Nipkow-Scheibe und die Justierung der Optik außerordentlich erschwert, da der Strahlengang vom beleuchtungsseitigen Loch über einen Objektpunkt stets genau auf ein nachweisseitiges Loch treffen muß, und zwar für alle Löcher der Scheibe.

Der Erfindung liegt die Aufgabe zugrunde, eine Anordnung zur Erzeugung eines optischen Bildkontrasts anzugeben, die die Vorteile der Moiré-Anordnung und der Simultan-Raster-Anordnungen vereinigt und dabei mit beschränktem Bauaufwand und einfacher Justierung auskommt.

Diese Aufgabe wird bei einer gattungsgemäßen Einrichtung durch die kennzeichnenden Merkmale des Anspruchs 1 gelöst. Vorteilhafte Weiterbildungen sind in den Unteransprüchen 2 bis 14 angegeben.

Die erfindungsgemäße Anordnung ist einfach in bekannte optische Instrumente, insbesondere Mikroskope, zu integrieren.

Es können beliebige Lichtquellen auch für weißes Licht verwendet werden; das Wechsellichtverfahren ergibt einen vorteilhaften Kompromiß zwischen der Lichtstärke bzw. Bildaufbauzeit des Nachweises und der Objektbelastung durch die Bestrahlung; Streulicht und Reflexion sind unterdrückt, ein optisches Tiefenschnittverfahren wird ermöglicht und es kann Überauflösung erzielt werden. Beste Auflösung und Tiefenschärfe wird mit zweidimensionalen Punktrastern als Raster erzielt. Einen guten Kompromiß zwischen Auflösung und Lichtstärke der Anordnung ergibt jedoch auch die Verwendung von Liniengittern. Objekte können im Hell- und Dunkelfeld, in Auf- und Durchlicht beobachtet werden. Es ergeben sich Vorteile bei der Fluoreszenz-Mikroskopie.

Mit einer geeigneten Verarbeitungsschaltung ist ein Autofokus ohne zusätzliche optische und optoelektronische Elemente möglich.

Beispiele für die erfindungsgemäße Anordnung sind in der Zeichnung schematisch dargestellt.

Fig. 1    zeigt schematisch ein Beispiel der erfindungsgemäßen Anordnung zur Erzeugung eines optischen Bildkontrastes, welche in ein bekanntes Auflicht-Mikroskop integriert ist.

Fig. 2    zeigt ein Beispiel der erfindungsgemäßen Anordnung in Durchlicht-Ausführung mit unterschiedlicher Ausführung der Raster und der Einrichtungen zur Erzeugung von Relativbewegungen.

Fig. 3    zeigt ein Diagramm der zeitlichen Modulation der Lichtintensität für verschieden helle Objektpunkte.

Fig. 4      zeigt eine erfindungsgemäße Anordnung mit Dunkelfeldbeleuchtung des ersten Rasters.

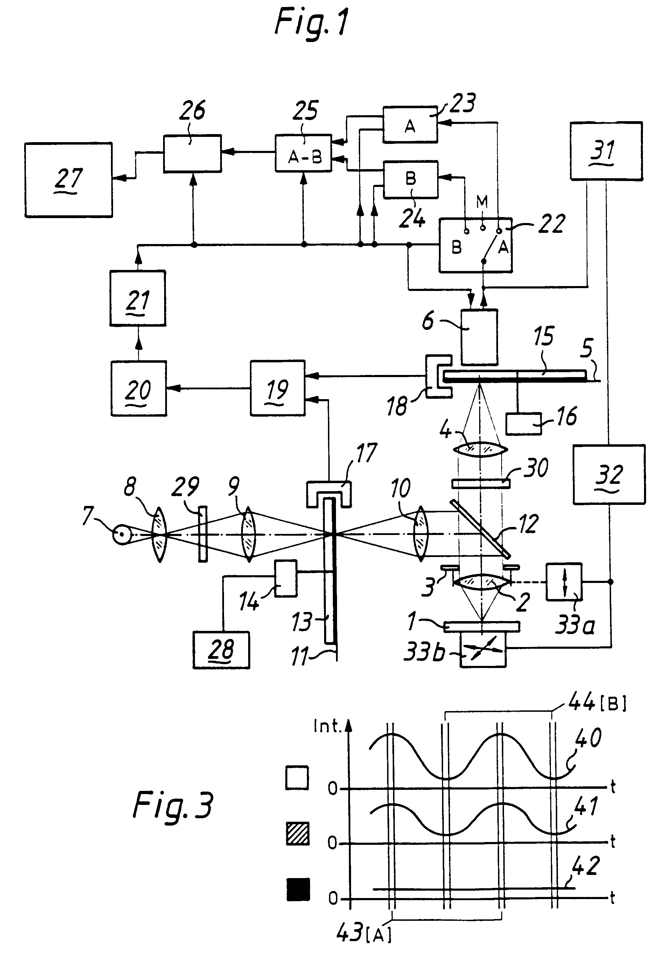

Fig. 1 zeigt zunächst eine bekannte Mikroskopanordnung. Ein Objekt 1 wird durch ein Objektiv 2 mit der Eintrittspupille 3 und einer Feldlinse 4 auf eine (Zwischen-)Bildebene 5 abgebildet und von einem Nachweissystem 6 erfaßt. Das Nachweissystem 6 kann aus Okular und Auge bei visueller Beobachtung bestehen, vorzugsweise aber aus einem optoelektrischen Bildwandler, z. B. einer CCD-Kamera.

Zur Auflicht-Beleuchtung des Objekts 1 dient eine Anordnung mit einer Lichtquelle 7, einem Kollektor 8 und Linsen 9 und 10. Mit einem Strahlteiler 12 wird der Beleuchtungsstrahlengang in den Abbildungsstrahlengang eingekoppelt.

Erfindungsgemäß wird in dieses Mikroskop ein erstes Raster 13 eingesetzt. Dies ist als radiales Strichgitter auf einer transparenten Scheibe ausgeführt und in der Leuchtfeldblendenebene 11 der Auflicht-Beleuchtungsanordnung angeordnet. Dadurch wird ein scharfes Bild des Gitters 13 auf die Ebene des Objekts 1 projiziert. Ein Motor 14 dreht die Gitter-Scheibe 13 und erzeugt so eine Bewegung des Bildes des Gitters 13 in der Objektebene als erste Relativbewegung gemäß der Erfindung.

In der Bildebene 5 ist weiterhin ein zweites Raster 15 angeordnet. Es ist als Gitter-Scheibe gleich ausgeführt wie das erste Raster 13 und kann durch Reproduktionstechnik nach dem gleichen Muster hergestellt werden.

Ein zweiter Motor 16 dreht die zweite Gitter-Scheibe 15 und erzeugt so zum Bild der Objektebene in der Bildebene 5 die zweite Relativbewegung. Dazu ist die optische Anordnung so aufgebaut, daß die Abbildung von der Leuchtfeldblendenebene 11 über die Reflektion an der Objektebene auf die Bildebene 5 im Maßstab 1:1 erfolgt. Auf beiden Gittern 13 und 15 wird jeweils eine Fläche ausgeleuchtet bzw. vom Nachweissystem 6 erfaßt, die eine volle Ausnutzung des Sehfeldes des Mikroskops auf dem Objekt 1 ergibt.

Die ausgeleuchtete Fläche des ersten Gitters 13 wird, wenn das Objekt 1 strukturlos reflektiert, kongruent auf die erfaßte Fläche des zweiten Gitters 15 abgebildet, wobei es eine bestimmte relative Winkelstellung der drehenden Gitter-Scheiben 13 und 15 gibt, in der das Bild des ersten Gitters 13 mit dem zweiten Gitter 15 zur Deckung kommt. Durch den Motor 14 wird die erste Gitter-Scheibe 13 mit einer Winkelgeschwindigkeit $w_{13}$ gedreht, während der Motor 16 die zweite Gitter-Scheibe 15 mit einer abweichenden Winkelgeschwindigkeit $w_{15}$ dreht.

Aus dem radialen Abstand r des zugehörigen Gitterpunktes von der Drehachse und aus der Ortsfrequenz bzw. der Gitterkonstante des ersten Gitters 13 ergibt sich die Kreisfrequenz $w_1 = w_{13} \cdot r \cdot \Omega$ , mit der die Beleuchtung eines Punktes des Objekts 1 zeitlich moduliert wird.

Durch die Bewegung des zweiten Gitters 15 wird das Bild des Objekts 1 in der Bildebene 5 gescannt und es erscheint im Nachweissystem 6 das Bild eines Punktes des Objekts 1 zeitlich moduliert mit der Frequenz $w_2 = w_{15} \cdot r \cdot \Omega$ , wenn r und $\Omega$ wie im dargestellten Beispiel bei beiden Gittern (13,15) gleich sind.

Daraus ergibt sich eine Modulation der Lichtintensität eines Bildpunktes aus der Überlagerung der beiden Frequenzen $w_1$ und $w_2$, wodurch eine Schwebung mit der Frequenz $w_s = w_1 - w_2$ entsteht (Heterodyn-Effekt).

Das heißt, daß vom Nachweissystem 6 ein Bild aufgenommen wird, dessen Lichtintensität in allen Punkten simultan mit der Schwebungsfrequenz $w_s$ moduliert ist. Bei langsamer Modulation, d. h. mit $w_s < 20$ HZ kann dieses Bild auch mit dem menschlichen Auge gut beobachtet werden. Das Bild zeigt einen Amplitudenkontrast der Oszillation der Lichtintensität, d. h. klassisch helle Stellen zeigen eine hohe Amplitude der Oszillation, klassisch dunkle Stellen sind unmoduliert.

Mit diesem erfindungsgemäßen Amplitudenkontrast können alle Vorteile der simultanen konfokalen Rastermikroskopie erreicht werden, wenn die beiden Raster bzw. Gitter 13 und 15 nur geeignet ausgebildet werden. Dazu ist eine hohe Ortsfrequenz bzw. Gitterkonstante im Bereich der halben bis zur ganzen vom Mikroskop klassisch inkohärent übertragbaren Ortsfrequenz vorteilhaft.

Das vom Nachweissystem 6 aufgenommene Bild enthält bei genauer Betrachtung noch Anteile, die nicht mit der Schwebungsfrequenz $w_s$ moduliert sind, insbesondere Gleichlicht und Anteile mit der Summenfrequenz $w_1 + w_2$ und mit $w_2$. Diese können aber leicht ausgefiltert werden. Dazu ist es vorteilhaft, die Frequenzen $w_1$ und $w_2$ groß gegen ihre Differenz $w_s$ zu wählen und eine Anpassung an die Zeitkonstanten des Nachweissystems 6 (Auge, CCD-Kamera) vorzunehmen.

Beschrieben ist die Ausführung der Raster als Strichgitter, die im wesentlichen senkrecht zur Gitterorientierung bewegt werden. Dadurch wird die Anordnung besonders lichtstark und es können gut 10% bis 20% des Sehfelds simultan beobachtet werden. Allerdings ist Überauflösung nur in der Richtung senkrecht zur Gitterorientierung erzielbar. Deshalb ist es bei Verwendung eines Strichgitters vorteilhaft, optische Mittel zur Bilddrehung vorzusehen, mit der die Richtung der Überauflösung in eine Vorzugsrichtung des Objekts gedreht werden kann. Zum Beispiel wäre dazu ein Drehprisma in den Strahlengang zwischen dem Strahlenteiler 12 und dem Objektiv 2 einzufügen. Dies ist besonders zur Strukturbreitenbestimmung z.B. von Halbleiterbauelementen geeignet.

Werden die Raster 13 und 15 als zweidimensionale Raster mit punktförmigen Öffnungen ausgeführt, so ergibt sich die volle Auflösung und Tiefenschärfe eines konfokalen Rastermikroskops. Gegenüber der Verwendung von Strichgittern ergibt sich aber ein Verlust an Lichtstärke.

Außer durch rotierende Scheiben-Gitter 13,15 können die beiden bewegten Raster und die Einrichtungen 14,16 zur Erzeugung der Relativbewegungen auch durch andere Systeme gebildet werden.

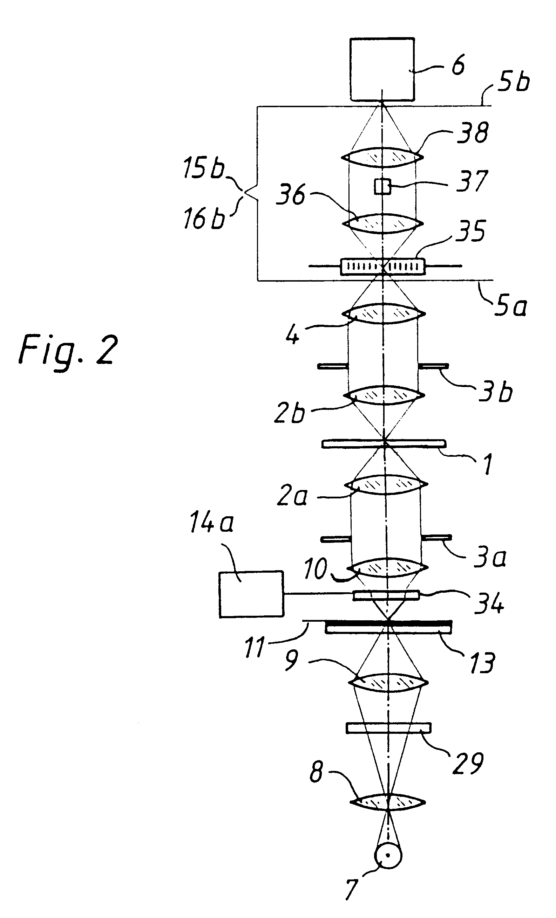

An einem Durchlicht-Mikroskop zeigt Fig. 2 Beispiele dafür. Ein Kondensor 2a mit Blende 3a für die Beleuchtung ist beim Durchlicht-Mikroskop zusätzlich zum Objektiv 2b mit Blende 3b notwendig. In der Leuchtfeldblendenebene 11 der Beleuchtungseinrichtung das erste Raster 13, z. B. als Parallel-Liniengitter, fest angeordnet. Es wird also in der Objektebene abgebildet. Eine erste Relativbewegung zwischen diesem Bild und dem Objekt 1 wird durch eine Einrichtung, bestehend aus drehbarer planparalleler Glasplatte 34 und Stellantrieb 14a, erzeugt.

Auch das zweite Raster 15 und die zweite Einrichtung zur Erzeugung der zweiten Relativbewegung werden vorteilhaft mit den gleichen Mitteln realisiert.

Es können beispielsweise auch piezoelektrisch in einem Substrat erzeugte laufende Ultraschallwellen oder andere optronische Mittel als Raster 15b und gleichzeitig als Einrichtung 16b für die Relativbewegung Verwendung finden. Dabei kann dann auf die Bewegung von Bauteilen mit den daraus folgenden Schwingungsproblemen etc. verzichtet werden.

Im Beispiel der Fig. 2 ist das zweite Raster 15b und die zweite Einrichtung 16b für die zweite Relativbewegung entsprechend ausgeführt. Dazu ist in der Bildebene 5a eine Bragg-Zelle 35 angeordnet. Zwei Linsen 36,38 und eine dazwischen angeordnete Phasenplatte 37 vervollständigen die Einrichtung, welche in der Ebene 5b das vom zweiten Raster 15b durchgelassene Bild erzeugt, welches vom Nachweissystem 6 aufgenommen und wie beim Beispiel der Fig. 1 verarbeitet wird. Auch hier wird gewöhnlich im Beleuchtungsstrahlengang die gleiche Anordnung vorgesehen.

Vorteilhaft ist eine elektronische Auswertung des vom Nachweissystem 6 aufgenommenen Bildes, wofür Fig. 1 ein Beispiel einer geeigneten Schaltungsanordnung enthält.

Durch Lichtschranken 17 und 18 werden von den Gittern 13 und 15 die Frequenzen $w_1$ und $w_2$ abgetastet, durch einen Multiplizierer 19 und ein nachgeschaltetes Tiefpaßfilter 20 wird ein elektronisches Signal mit der Schwebungsfrequenz $w_s$ gebildet, welche auf optomechanischem Wege schon dem Bild im Nachweissystem 6 aufgeprägt wurde. Ein Schwellwertdetektor 21 bildet daraus ein Synchronisationssignal mit der Folgefrequenz $w_s$. Dieses Synchronisationssignal steuert dann folgende Operationen:

1. Kamerainhalt (CCD-Kamera 6) löschen
2. Umschalter 22 von Stellung M auf A schalten
3. Aufnahme eines Bildes während der Bildintegrationszeit und Transfer zu einem ersten Bildspeicher 23 (Bild A)
4. Umschalter 22 von Stellung A auf M schalten
5. Kamerainhalt löschen
6. Umschalter 22 von Stellung M auf B schalten
7. wie 3, jedoch zu einem zweiten Bildspeicher 24 (Bild B)
8. Umschalter 22 von Stellung B auf M schalten.

Dann kann der Ablauf wieder von vorn beginnen. Simultan wird durch das Synchronisationssignal des Schwellwertdetektors 21 die Subtraktion der Bilder A und B aus den Bildspeichern 23 und 24 in einem Subtrahierer 25, die Übertragung des Differenzbildes C auf einen dritten Bildspeicher 26 und die Datenausgabe, z.B. auf einem Bildschirmgerät 27, gesteuert. Durch die feste Phasenbeziehung der Bilder A und B ist das Differenzbild C nicht mehr mit der Schwebungsfrequenz $w_s$ moduliert und kann auf dem Bildschirmgerät 27 in üblicher Weise betrachtet werden. Vorteilhafterweise werden die Aufnahmezeitintervalle 43,44 für die Bilder A und B durch Einregeln der Phase des Synchronisationssignals gegenüber der Modulation des Bildes, welches zu der Kamera 6 gelangt, so gelegt, daß ein Bild A bei maximaler und das andere B bei minimaler Intensität des modulierten Bildes aufgenommen wird. Das Differenzbild C hat dann maximalen Kontrast.

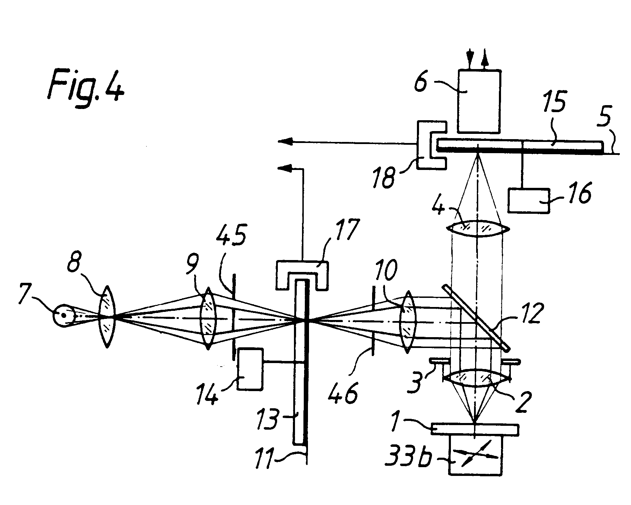

Fig. 3 zeigt die zeitliche Modulation der Lichtintensität für einen hellen 40, grauen 41 und schwarzen 42 Objektpunkt am Eingang des Nachweissystems 6. Die Kurven sind mit der Schwebungsfrequenz $w_s$ moduliert. Ein Gleichlichtanteil, z.B. aus der Umgebungsbeleuchtung der erfindungsgemäßen Anordnung, bewirkt, daß die Intensität nie Null wird und auch beim schwarzen Punkt 42 einen bestimmten von Null verschiedenen konstanten Wert beibehält. In den Intervallen 43, bei maximaler Intensität, wird nun Operation 3. Aufnahme von Bild A, durchgeführt. In den Intervallen 44, bei minimaler Intensität, erfolgt Operation 7. Aufnahme von Bild B.

Die Differenz der Bilder A und B ergibt dann für einen hellen Punkt 40 eine große Intensitätsdifferenz, für einen grauen Punkt 41 eine mittlere und für einen schwarzen Punkt 42 die Differenz Null.

Die Gleichlichtanteile werden unterdrückt und zeitlich hochfrequente Anteile der Bildmodulation werden durch die Bildintegrationszeit über die Intervalle 43,44 ausgemittelt.

Die dargestellte erfindungsgemäße Anordnung findet auch in vielfältig abgewandelten optischen Systemen vorteilhafte Anwendungen.

Wird nach Fig. 4 mit einer Zentralblende 45 eine Dunkelfeldbeleuchtung des ersten Rasters 13 im Projektionsstrahlengang realisiert und eine angepaßte Feldblende 46 vorgesehen, dann kann der Gleichlichtanteil in dem von der Nachweiseinrichtung 6 aufgenommenen Bild weiter reduziert werden.

Fluoreszenzkontrast wird erreicht mit einer geeigneten (kurzwelligen) Lichtquelle 7 und ggf. einem Filter 29 im Beleuchtungsstrahlengang, sowie mit einem Sperrfilter 30 für die Beleuchtungswellenlängen, das zwischen dem Strahlenteiler 12, der vorzugsweise ein dicheromatischer Teiler ist, und dem Nachweissystem 6 angeordnet wird. Es kann sogar die Fluoreszenzabklingzeit ortsabhängig bestimmt werden.

Dazu ist es erforderlich, daß die Einrichtung 14 zur Erzeugung der ersten Relativbewegung zwischen dem Bild des ersten Rasters 13 und dem Objekt 1 mit einer Geschwindigkeitseinstelleinrichtung 28 (Fig.1) versehen ist. Sobald nämlich die lokale Frequenz $w_1$ der Lichtmodulation durch das Bild des ersten Rasters13 auf dem Objekt 1 der Größe $2\pi/T$ ($T$ = Fluoreszenz-abklingzeit) nahekommt, wird das modulierte Fluoreszenzlicht im Nachweissystem 6 stark reduziert.

Vorteilhaft ist es, wenn auch die zweite Einrichtung 16 zur Erzeugung der zweiten Relativbewegung in der Geschwindigkeit verstellbar ist, so daß die Schwebungsfrequenz $w_s$ konstant gehalten werden kann.

Ohne zusätzlichen optischen Aufwand kann mit der Anordnung auch eine automatische Spot- oder Integralfokussierung realisiert werden. Zum Beispiel kann ein in einem Übersichtsbild auffälliger Bildbereich festgelegt werden und gezielt dieser Bildbereich scharfgestellt werden.

Erforderlich ist dazu eine zusätzliche Integrationsanordnung 31, die die Amplitude der Lichtintensität eines einstellbaren Flächenbereichs der vom Nachweissystem 6 erfaßten Bilder über die Fläche integriert. Ebenfalls wird eine Positioniereinrichtung 33 für die Relativlage von Objekt 1 und Objektiv 2 benötigt. Zweckmäßig ist dafür die Kombination eines motorischen Z-Triebs (33a) für den Mikroskoptubus (Objektiv 2 usw.) und eines elektronischen x-y-Positioniertisches 33b für das Objekt 1. In Fig. 1 ist das dargestellt.

Die Integrationsanordnung 31 übernimmt aus dem Bildspeicher 26 einen bestimmten oder einstellbaren Bereich des Bildes C und bildet das Integral über die Lichtintensität in allen Bildpunkten des Bereichs.

Es kann auch im Nachweissystem 6 eine Fokussierung eines Bildbereichs auf einen Punktdetektor realisiert werden, also eine optische Integrationsanordnung verwendet werden. Die Fokuslage für den ausgewählten Bildbereich ist dann erreicht, wenn das örtlich integrierte Wechsellichtsignal zeitlich maximale Amplitude aufweist. Dieses Maximum kann mit einem Regelkreis 32 für die Objektivverstellung 33a automatisch gefunden werden.

Darauf aufbauend sind auch Flächenmessungen möglich, wenn das untersuchte Objekt 1 einige Nebenbedingungen erfüllt.

Bei einem konstrastlosen Objekt 1 mit einer Höhenstruktur innerhalb des Tiefenschärfebereichs des zugrundeliegenden klassischen optischen Instruments kann die Fläche eines mit der erfindungsgemäßen Anordnung erzielten Tiefenschnitts aus der Höhe des Maximums der Amplitude des integrierten Wechsellichtsignals abgeleitet werden. Ohne weiteres ist so eine Bestimmung der Flächenverhältnisse verschiedener Tiefenschnitte zu erreichen. Dies ist z.B. bei der Prüfung von Halbleiterstrukturen vorteilhaft. Bei einer Durchlicht-Anordnung werden die Flächen gleicher Phasenschiebung bestimmt.

Die erfindungsgemäße Anordnung läßt sich, wenn die beiden Raster 13,15 mit gleicher statt erfindungsgemäß unterschiedlicher Gechwindigkeit bewegt werden, also z.B. die Gitter-Scheiben 13,15 mit gleicher Winkelgeschwindigkeit gedreht werden, im Prinzip in ein simultanes konfokales Raster-Mikroskop äquivalent zum Stand der Technik nach Xiao et al. und DE-A1 23 60 197 umwandeln. Dann muß aber, um wirklich die Vorteile jenes Systems zu erhalten, die Phasenlage der beiden Gitter-Scheiben mit höchster Genauigkeit einjustiert und konstant gehalten werden. Dieses Problem tritt offensichtlich bei der erfindungsgemäßen Anordnung mit den unterschiedlichen Geschwindigkeiten der beiden Raster nicht auf.

Gegenüber dem System von Petran et al. ergibt sich der Vorteil, daß auf die extremen Anforderungen an die Symmetrie der Gitter-Scheiben - auf jede Gitteröffnung muß eine zweite in einem bestimmten Winkel-Abstand exakt passen - und an die Justierung der Optik verzichtet werden kann. Die erfindungsgemäße Ähnlichkeits-bzw. Kongruenzbedingung für die beiden Raster 13,15 ist dagegen wesentlich einfacher zu realisieren und muß auch nicht sehr eng eingehalten werden.

Gegenüber den Systemen nach Xiao et al. und nach der DE-A1 23 60 197 ergibt sich weiterhin der Vorteil, daß das durch das beleuchtungsseitige Gitter ausgefilterte Licht ganz offensichtlich nicht zum Nachweissystem gelangen kann, so daß Probleme der Gleichlichtunterdrückung erheblich reduziert sind. Nur bei der erfindungsgemäßen Anordnung ist auch die beschriebene einfache Gleichlichtunterdrückung durch Differenzbildung zweier Bilder (Fig. 1,3;22-26) möglich.

**Patentansprüche**

1. Anordnung zur Erzeugung eines optischen Bildkontrastes
   - mit einem ersten Raster (13),
   - mit einer Projektionsanordnung zur Erzeugung eines Bildes des ersten Rasters (13) in einer Objektebene,
   - mit einer ersten Einrichtung (14) zur Erzeugung einer ersten Relativbewegung zwischen dem Bild des ersten Rasters (13) und dem Objekt (1),
   - mit einem zweiten Raster (15) , das dem ersten Raster (13) geometrisch ähnlich ist,
   - mit einer Anordnung zur Abbildung der Objektebene in die Ebene des zweiten Rasters (15) , wobei der Abbildungsmaßstab so gewählt ist, daß das dabei entstehende Bild des ersten Rasters (13) in der Ebene des zweiten Rasters (15) diesem kongruent ist,
   **dadurch gekennzeichnet, daß**
   - eine zweite Einrichtung (16) vorgesehen ist, die in der Ebene (5) des zweiten Rasters (15) eine zweite Relativbewegung zwischen dem Bild des Objekts und dem zweiten Raster (15) bewirkt, wobei in der Ebene des zweiten Rasters (15) das Bild des Objekts (1) und das Bild des ersten Rasters (13) gegenüber dem zweiten Raster (15) zu jedem Zeitpunkt unterschiedliche Relativgeschwindigkeiten aufweisen, daß
   - eine Nachweiseinrichtung (6) für das vom zweiten Raster (15) durchgelassene, örtlich und zeitlich modulierte Licht vorgesehen ist, wobei die örtliche Modulation von den optischen Eigenschaften des Objekts (1) in der Objektebene und die zeitliche Modulation von der Geschwindigkeitsdifferenz zwischen dem zweiten Raster (15) und dem darauf erzeugten Bild des ersten Rasters (13) abhängig ist.

2. Mikroskop mit einer Anordnung zur Erzeugung eines optischen Bildkontrastes nach Anspruch 1.

3. Anordnung zur Erzeugung eines optischen Bildkontrastes nach Anspruch 1, **dadurch gekennzeichnet**, daß die beiden Raster (13,15) als Liniengitter ausgeführt sind.

4. Anordnung zur Erzeugung eines optischen Bildkontrastes nach Anspruch 3, **dadurch gekennzeichnet**, daß bewegliche optische Mittel zur Bilddrehung zwischen den Rastern (13,15) und dem Objekt (1) angeordnet sind.

5. Anordnung zur Erzeugung eines optischen Bildkontrastes nach Anspruch 1, **dadurch gekennzeichnet**, daß die beiden Raster (13,15) als zweidimensionale Raster ausgeführt sind.

6. Anordnung zur Erzeugung eines optischen Bildkontrastes nach Anspruch 1, **dadurch gekennzeichnet**, daß die beiden Raster (13,15) als Transmissions-Amplitudenfilter auf Scheiben aufgebracht sind und daß diese mittels Motoren (14,16) zur Erzeugung der ersten und zweiten Relativbewegung mit unterschiedlicher Winkelgeschwindigkeit gedreht werden (Fig. 1).

7. Anordnung zur Erzeugung eines optischen Bildkontrastes nach Anspruch 1, **dadurch gekennzeichnet**, daß zwischen den Rastern (13,15) und dem Objekt (1) bewegliche, strahlablenkende optische Mittel (34) als erste oder zweite Einrichtung zur Erzeugung der ersten oder zweiten Relativbewegung angeordnet sind (Fig. 2).

8. Anordnung zur Erzeugung eines optischen Bildkontrastes nach Anspruch 1, **dadurch gekennzeichnet**, daß Antriebe, welche die Raster bewegen, als erste oder zweite Einrichtung zur Erzeugung der ersten oder zweiten Relativbewegung angeordnet sind (Fig. 1).

9. Anordnung zur Erzeugung eines optischen Bildkontrastes nach Anspruch 1, **dadurch gekennzeichnet**, daß jeweils eines der beiden Raster (13,15) und die zugehörige Einrichtung (14,16), die eine Relativbewegung bewirkt, gemeinsam als ein steuerbares optronisches Element ausgeführt sind (Fig. 2).

10. Anordnung zur Erzeugung eines optischen Bildkontrastes nach Anspruch 1, **dadurch gekennzeichnet**, daß die beiden Raster (13,15) mit einer Reproduktionstechnik nach dem gleichen Muster hergestellt sind.

11. Anordnung zur Erzeugung eines optischen Bildkontrastes nach Anspruch 1, **dadurch gekennzeichnet**, daß als Nachweiseinrichtung unmittelbar an die Ebene (5) des zweiten Rasters (15) anschließend ein optoelektronisches Bildwandlersystem (6) angeordnet ist, welches mit einem Zeittakt Bilder von dem vom zweiten Raster (15) durchgelassenen Licht erzeugt.

12. Anordnung zur Erzeugung eines optischen Bildkontrastes nach Anspruch 11, **dadurch gekennzeichnet**, daß ein System (22,23,24,25,26) zur Bildung der Differenz zweier zeitverschoben aufgenommener Bilder nachgeordnet ist, welches ein Bild des Objekts (1) ohne zeitliche Modulation der Lichtintensität erzeugt (Fig. 1).

13. Anordnung zur Erzeugung eines optischen Bildkontrastes nach Anspruch 1, **dadurch gekennzeichnet**, daß
   - die Projektionsanordnung (2,3,7-12) das Bild des ersten Rasters (13) in der Objektebene mit Licht erzeugt, das zur Fluoreszenzanregung im Objekt (1) geeignet ist,
   - zwischen dem Objekt (1) und dem zweiten Raster (15) ein Sperrfilter (30) für die Wellenlängen des Lichts der Projektionsanordnung (2,3,7 - 12) angeordnet ist,
   - mindestens die erste Einrichtung (14) zur Erzeugung der ersten Relativbewegung eine Geschwindigkeitseinstelleinrichtung aufweist.

14. Anordnung zur Erzeugung eines optischen Bildkontrastes nach Anspruch 11, **dadurch gekennzeichnet**, daß
   - eine Positioniereinrichtung (33a,b) für die Lage des Objekts(1) gegenüber der Projektionsanordnung (2,3,7 - 12) und der Anordnung (2,3,4,12) zur Abbildung der Objektebene vorgesehen ist,
   - dem optoelektronischen Bildwandlersystem (6) eine Integrationsanordnung (31) nachgeordnet ist, die die Amplitude der Lichtintensität eines einstellbaren Flächenbereichs der erzeugten Bilder über die Fläche integriert.

15. Anordnung nach Anspruch 1, **dadurch gekennzeichnet,** daß die Projektionsanordnung (7-12) zur Erzeugung eines Bildes des ersten Rasters (13) in der Objektebene mit Blenden (45, 46) für eine Dunkelfeldbeleuchtung des ersten Rasters (13) ausgestattet ist (Fig. 4).

**Claims**

1. Arrangement for the production of an optical image contrast
   - with a first raster (13)
   - with a projection arrangement for the production of an image of the first raster (13) in an object plane,
   - with a first equipment (14) for the production of a first relative movement between the image of the first raster (13) and the object (1),
   - with a second raster (15), which is geometrically similar to the first raster (13)
   - and with an arrangement for imaging the object plane into the plane of the second raster (15), for which the imaging scale is so chosen that the image of the first raster (13) in that case arising in the plane of the second raster (15) is congruent therewith,
   characterised thereby, that
   - a second equipment (16) is provided, which in the plane (5) of the second raster (15) causes a second relative movement between the image of the object and the second raster (15), wherein the image of the object (1) and the image of the first raster (13) display different relative velocities relative to the second raster (15) in the plane of the second raster (15) at any instant, that
   - a detection equipment (6) is provided for the light, which is modulated in location and time and which is transmitted by the second raster (15), wherein the modulation in location is dependent on the optical properties of the object (1) in the object plane and the modulation in time is dependent on the difference in velocity between the second raster (15) and the image of the first raster (13) produced thereon.

2. Microscope with an arrangement for the production of an optical image contrast according to claim 1.

3. Arrangement for the production of an optical image contrast, according to claim 1, characterised thereby, that both the rasters (13, 15) are constructed as line gratings.

4. Arrangement for the production of an optical image contrast according to claim 3, characterised thereby, that movable optical means are arranged between the rasters (13, 15) and the object (1) for image rotation.

5. Arrangement for the production of an optical image contrast according to claim 1, characterised thereby, that both the rasters (13, 15) are constructed as two-dimensional rasters.

6. Arrangement for the production of an optical image contrast according to claim 1, characterised thereby, that both the rasters (13, 15) are applied as transmission amplitude filters onto discs and that these are rotated at different angular velocities for the production of the first and the second relative movement by means of motors (14, 16) (Figure 1).

7. Arrangement for the production of an optical image contrast according to claim 1, characterised thereby, that movable beam-deflecting means (34) are arranged between the rasters (13, 15) and the object (1) as first or second equipment for the production of the first or second relative movement (Figure 2).

8. Arrangement for the production of an optical image contrast according to claim 1, characterised thereby, that drives, which move the rasters, are arranged as first or second equipment for the production of the first or second relative movement (Figure 1).

9. Arrangement for the production of an optical image contrast according to claim 1, characterised thereby, that a respective one of both the rasters (13, 15) and the associated equipment (14, 16), which causes a relative movement, are constructed together as a controllable optronic element (Figure 2).

10. Arrangement for the production of an optical image contrast according to claim 1, characterised thereby, that both the rasters (13, 15) are made to the same pattern by a reproduction technique.

11. Arrangement for the production of an optical image contrast according to claim 1, characterised thereby, that an opti-electronic image converter system (6), which produces images of the light transmitted by the second raster (15) at a time rate, is arranged as detection equipment directly adjoining the plane (5) of the second raster (15).

12. Arrangement for the production of an optical image contrast according to claim 11, characterised thereby, that a system (22, 23, 24, 25, 26) is arranged downstream for the formation of the difference between two images recorded at different times and produces an image of the object (1) without modulation of the light intensity in time (Figure 1).

13. Arrangement for the production of an optical image contrast according to claim 1, characterised thereby, that

- the projection arrangement (2, 3, 7 to 12) produces the image of the first raster (13) in the object plane by light which is suitable for the fluorescent excitation in the object (1),
- a blocking filter (30) for the wavelength of the light of the projection arrangement (2, 3, 7 to 12) is arranged between the object (1) and the second raster (15) and
- at least the first equipment (14) for the production of the first relative movement displays an equipment for adjusting the velocity.

14. Arrangement for the production of an optical image contrast according to claim 11, characterised thereby, that
- a positioning equipment (33a, 33b) is provided for the position of the object (1) relative to the projection arrangement (2, 3, 7 to 12) and the arrangement (2, 3, 4, 12) for the imaging of the object plane and
- an integrating arrangement (31), which integrates the amplitude of the light intensity of an adjustable areal region of the produced images over the area, is arranged downstream of the opti-electronic image converter system (6).

15. Arrangement according to claim 1, characterised thereby, that the projection arrangement (7 to 12) for the production of an image of the first raster (13) in the object plane is equipped with light stops (45, 46) for a dark field illumination of the first raster (13) (Figure 4).

**Revendications**

1. Agencement pour la production d'un contraste d'image optique,
   - avec une première grille (13),
   - avec un agencement de projection pour la production d'une image de la première grille (13) dans un plan d'objet,
   - avec un premier dispositif (14) pour la production d'un premier mouvement relatif entre l'image de la première grille (13) et l'objet (1),
   - avec une seconde grille (15) qui est géométriquement semblable à la première grille (13),
   - avec un agencement pour la reproduction en image du plan d'objet dans le plan de la seconde grille (15), l'échelle de reproduction en image étant choisie de telle façon que l'image de la première grille (13) ainsi produite dans le plan de la seconde grille (15) soit congruente à celle-ci, caractérisé

- en ce qu'un second dispositif (16) est prévu, qui réalise, dans le plan (5) de la seconde grille (15), un second mouvement relatif entre l'image de l'objet et la seconde grille (15), l'image de l'objet (1) et l'image de la première grille (13), dans le plan de la seconde grille (15), présentant à chaque instant, vis-à-vis de la seconde grille (15), des vitesses relatives différentes,
- en ce qu'un dispositif de détection (6) est prévu pour la lumière localement modulée dans le temps que la seconde grille (15) a laissé passer, la modulation locale dépendant des propriétés optiques de l'objet (1) dans le plan d'objet et la modulation dans le temps dépendant de la différence de vitesse entre la seconde grille (15) et la première image, produite sur celle-ci, de la première grille (13).

2. Microscope avec l'agencement pour la production d'un contraste d'image optique selon la revendication 1.

3. Agencement pour la production d'un contraste d'image optique selon la revendication 1, caractérisé en ce que les deux grilles (13, 15) sont réalisées sous forme de grilles à lignes.

4. Agencement pour la production d'un contraste d'image optique selon la revendication 3, caractérisé en ce que des moyens optiques mobiles pour la rotation d'image sont disposés entre les grilles (13, 15) et l'objet (1).

5. Agencement pour la production d'un contraste d'image optique selon la revendication 1, caractérisé en ce que les deux grilles (13, 15) sont réalisées sous forme de grilles bidimensionnelles.

6. Agencement pour la production d'un contraste d'image optique selon la revendication 1, caractérisé en ce que les deux grilles (13, 15) sont rapportées sous forme de filtres d'amplitude de transmission sur des disques et en ce que ceux-ci sont tournés au moyen de moteurs (14, 16) pour la production des premier et second mouvements relatifs à vitesses angulaires différentes (figure 1).

7. Agencement pour la production d'un contraste d'image optique selon la revendication 1, caractérisé en ce que des moyens optiques mobiles de déflexion de rayons (34) sont montés entre les grilles (13, 15) et l'objet (1) en tant que premier ou second dispositif pour la production du premier ou second mouvement relatif (figure 2).

8. Agencement pour la production d'un contraste d'image optique selon la revendication 1, caractérisé en ce que des dispositifs d'entraînement, qui déplacent les grilles, sont montés en tant que premier ou second dispositif pour la production du premier ou second mouvement relatif (figure 1).

9. Agencement pour la production d'un contraste d'image optique selon la revendication 1, caractérisé en ce que respectivement l'une des deux grilles (13, 15) et le dispositif associé (14, 16), qui assure un mouvement relatif, sont réalisés en commun sous forme d'un élément optronique pilotable (figure 2).

10. Agencement pour la production d'un contraste d'image optique selon la revendication 1, caractérisé en ce que les deux grilles (13, 15) sont fabriquées par une technique de reproduction selon le même modèle.

11. Agencement pour la production d'un contraste d'image optique selon la revendication 1, caractérisé qu'un système de transformation d'image opto-électronique (6), qui produit, avec une cadence, des images de la lumière que la seconde grille (15) a laissé passer, est monté en tant que dispositif de détection en étant directement adjacent au plan (5) de la seconde grille (15).

12. Agencement pour la production d'un contraste d'image optique selon la revendication 11, caractérisé en ce qu'un système (22, 23, 24, 25, 26), pour la formation de la différence de deux images reçues de façon décalée dans le temps, est monté à la suite, lequel produit une image de l'objet (1) sans modulation dans le temps de l'intensité lumineuse (figure 1).

13. Agencement pour la production d'un contraste d'image optique selon la revendication 1, caractérisé en ce que

- l'agencement de projection (2, 3, 7-12) produit l'image de la première grille (13) dans le plan d'objet avec de la lumière qui est appropriée pour l'excitation de la fluorescence dans l'objet (1),
- un filtre d'arrêt (30), pour les longueurs d'onde de la lumière de l'agencement de projection (2, 3, 7-12), est monté entre l'objet (1) et la seconde grille (15),

- au moins le premier dispositif (14) pour la production du premier mouvement relatif comporte un système de réglage de vitesse.

14. Agencement pour la production d'un contraste d'image optique selon la revendication 11, caractérisé en ce que
    - il est prévu un dispositif de positionnement (33a, b) pour la position de l'objet (1) par rapport à l'agencement de projection (2, 3, 7-12) et à l'agencement (2, 3, 4, 12) pour la reproduction en image du plan d'objet,
    - à la suite du système de transformation d'image opto-électronique (6) est monté un agencement d'intégration (31) qui intègre l'amplitude de l'intensité lumineuse d'une zone de surface réglable des images produites, sur la surface.

15. Agencement selon la revendication 1, caractérisé en ce que l'agencement de projection (7-12) pour la production d'une image de la première grille (13) dans le plan d'objet est équipé de diaphragmes (45, 46) pour un éclairage sur fond obscur de la première grille (13) (figure 4).

# Fig.1

# Fig.3

EP 0 353 495 B1

Fig. 2

12

Fig. 4